Europäisches Patentamt

(19) European Patent Office

Office européen des brevets

(11) Numéro de publication: **0 292 364**
**A1**

## (12) DEMANDE DE BREVET EUROPEEN

(21) Numéro de dépôt: **88401154.5**

(22) Date de dépôt: **11.05.88**

(51) Int. Cl.⁴: **B 60 J 1/02**

(30) Priorité: **20.05.87 FR 8707049**

(43) Date de publication de la demande:
**23.11.88 Bulletin 88/47**

(84) Etats contractants désignés:
**AT BE CH DE ES GB GR IT LI LU NL SE**

(71) Demandeur: **BOUSSOIS S.A.**
**126-130 rue Jules Guesde**
**F-92302 Levallois-Perret (FR)**

(72) Inventeur: **Hochart, Paul**
**rue des Usines**
**F-59570 La Longueville (FR)**

**Pagnucco, Gilbert**
**9 Allée des Eglantines**
**F-78310 Maurepas (FR)**

**Bertrand, Marceau**
**29 Cité des Platanes**
**F-59168 Boussois (FR)**

**Bertrand, Alain**
**11 Boulevard Calmette**
**F-59460 Jeumont (FR)**

(74) Mandataire: **Bouju, André**
**Cabinet Bouju 38 avenue de la Grande Armée**
**F-75017 Paris (FR)**

(54) **Dispositif pour fixer un vitrage sur un cadre rigide.**

㉝ Le dispositif (1) est destiné à la fixation d'un vitrage (2) sur un cadre rigide (3). Ce vitrage (2) comporte à sa périphérie un cordon (5) en matière thermofusible.

Le dispositif (1) comprend un profilé (9) en matière plastique auquel est fixé un élément résistant et chauffant (10) en métal élastique de section sensiblement en U, l'une (10a) des ailes de cet élément (10) étant fixée au profilé (9) et l'autre aile (10b) étant libre par rapport à ce profilé de façon à former avec celui-ci une pince pouvant s'engager élastiquement sur la paroi (8) du cadre rigide (3).

Utilisation notamment pour coller les pare-brise et les lunettes arrières d'automobiles.

FIG.4

EP 0 292 364 A1

## Description

### "Dispositif pour fixer un vitrage sur un cadre rigide"

La présente invention concerne un dispositif pour fixer un vitrage, en particulier un pare-brise, une lunette arrière ou une custode d'automobile, sur un cadre rigide, ce vitrage comportant à sa périphérie et sur sa face destinée à être appliquée contre le cadre rigide, un cordon en matière thermofusible.

La fixation du vitrage sur le cadre rigide est réalisée en chauffant le cordon en matière thermofusible, soit au moyen d'air chaud, soit au moyen d'un rayonnement infra-rouge, soit par effet Joule. Dans ce dernier cas, un élément résistant chauffant est incorporé dans le cordon en matière thermofusible.

Etant donné que cet élément chauffant est en partie noyé au sein de la matière thermofusible du cordon, le temps de chauffe par effet Joule nécessaire pour que la matière thermofusible atteigne à sa surface extérieure une température suffisante pour obtenir le collage est relativement long (de l'ordre de 4 minutes dans le cas de la pose d'un pare-brise d'automobile).

Pour réduire le temps de chauffe, lors de la pose sur une chaîne de fabrication en série, on a ainsi recours à des moyens de chauffage complémentaires tels que l'air chaud ou le rayonnement infra-rouge qui sont appliqués à la fois sur le cordon en matière thermofusible et sur le cadre rigide.

Ces moyens de chauffage complémentaires doivent être utilisés avec précaution pour éviter le phénomène de glaçure superficielle du cordon thermofusible.

Par ailleurs, lors de la pose d'un vitrage, le cordon thermofusible s'écrase plus ou moins régulièrement sur le cadre rigide, ce qui, vu de l'intérieur du vitrage présente un aspect inesthétique.

Le but de la présente invention est de remédier aux inconvénients des réalisations connues précitées.

Le dispositif visé par l'invention est destiné à fixer un vitrage, en particulier un pare-brise ou une lunette arrière d'automobile, sur un cadre rigide, ce vitrage comportant à sa périphérie et sur sa face destinée à être appliquée contre le cadre rigide, un cordon en matière thermofusible, le cadre rigide comprenant une paroi destinée à recevoir ce cordon et s'étendant vers l'intérieur du cadre.

Suivant l'invention, ce dispositif est caractérisé en ce qu'il comprend un profilé en matière plastique auquel est fixé un élément résistant et chauffant en métal élastique de section sensiblement en U, l'une des ailes de cet élément étant fixée au profilé et l'autre aile étant libre par rapport à ce profilé, de façon à former avec celui-ci une pince pouvant s'engager élastiquement sur ladite paroi du cadre rigide.

Lorsque ce profilé est en position sur la paroi du cadre rigide destinée à recevoir le cordon thermofusible, l'aile libre de l'élément chauffant prend appui élastiquement sur la face de la paroi qui est destinée à recevoir le cordon thermofusible, en assurant ainsi une liaison mécanique entre cette paroi et le profilé.

Lors de la pose du vitrage, le cordon thermofusible fixé à la périphérie de celui-ci prend appui sur l'aile précitée de l'élément chauffant. En faisant passer un courant électrique approprié dans cet élément chauffant, on obtient un chauffage direct de la surface de contact entre le cordon thermofusible, l'aile de l'élément chauffant et la paroi du cadre, soit précisément la surface qui doit être collée. La durée du chauffage est ainsi très réduite et l'utilisation de moyens de chauffage complémentaires n'est plus nécessaire.

Bien entendu, la matière plastique à laquelle est fixée l'élément chauffant formant pince de fixation ne doit pas se décomposer, ni couler à la température de chauffage mise en oeuvre.

Selon une version préférée de l'invention, l'une des ailes de l'élément chauffant est noyée dans la matière plastique du profilé. Cette mesure constitue un moyen commode pour rendre l'élément chauffant solidaire du profilé.

Selon une version avantageuse de l'invention, la largeur du profile est déterminée pour que celui-ci recouvre sensiblement la totalité de la surface de ladite paroi du cadre, opposée à celle destinée à recevoir le cordon thermofusible, et l'aile libre de l'élément chauffant est conformée de façon à pouvoir prendre appui élastique sur la surface de ladite paroi du cadre destinée à recevoir le cordon de collage, la longueur de cette aile étant suffisante pour que celle-ci vienne en contact avec le cordon en matière thermofusible disposé à la périphérie du vitrage.

Grâce à ces dispositions, le dispositif selon l'invention constitue un joint de finition qui recouvre esthétiquement la face de la paroi du cadre qui est visible du côté intérieur au vitrage, tout en masquant et isolant l'élément chauffant.

Par ailleurs, la surface de contact entre l'aile libre et élastique de l'élément chauffant et le cordon thermofusible est optimale et permet ainsi une augmentation rapide de la température du cordon dans la zone où celui-ci doit être collé au cadre rigide.

Selon une version particulièrement avantageuse de l'invention, le profilé en matière plastique présente une section sensiblement en forme de L, l'une des ailes de ce profilé étant destinée à recouvrir la surface de ladite paroi du cadre, opposée à celle destinée à recevoir le cordon en matière thermofusible et l'autre aile étant destinée à s'étendre vers l'extérieur du cadre. Cette autre aile du profilé masque ainsi le cordon de collage, tout en limitant le débordement du joint vers l'intérieur du cadre.

Grâce à cette disposition, le dispositif selon l'invention constitue un joint assurant une finition particulièrement esthétique.

D'autres particularités et avantages de l'invention apparaîtront encore dans la description ci-après.

Aux dessins annexés, donnés à titre d'exemples non limitatifs :

- la figure 1 est une vue en coupe transversale d'un dispositif conforme à l'invention,

- la figure 2 est une vue en coupe partielle d'un cadre rigide auquel est fixé le dispositif selon l'invention,

- la figure 3 est une vue de dessus de la figure 2, le cadre étant arraché,

- la figure 4 est une vue en coupe montrant un vitrage en position dans le cadre rigide,

- la figure 5 est une vue analogue à la figure 4, concernant une variante de réalisation.

- la figure 6 est une vue en coupe partielle d'une variante de cadre rigide auquel fixé le dispositif selon l'invention.

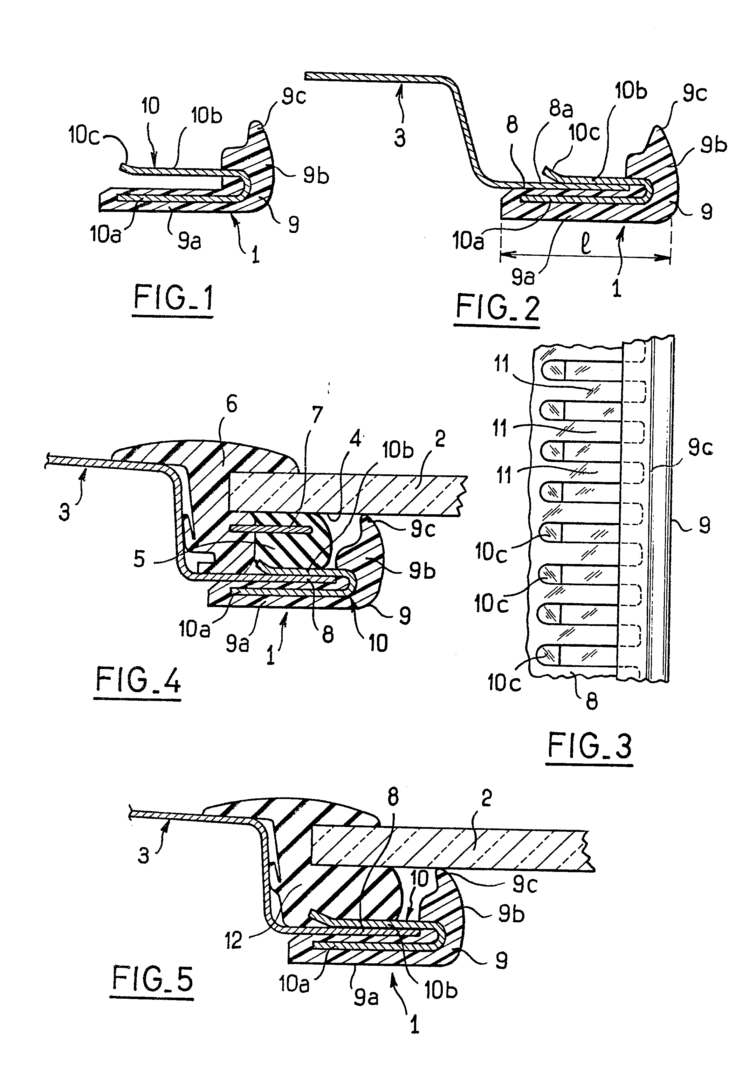

Dans la réalisation des figures 1 à 4, le dispositif 1 est utilisé pour fixer un vitrage 2 tel qu'on pare-brise ou une lunette arrière d'automobile, sur un cadre rigide en métal 3. Le vitrage 2 comporte (voir figure 4) à sa périphérie et sur sa face 4 destinée à être appliquée contre le cadre rigide 3, un cordon 5 en matière thermofusible.

Dans l'exemple représenté sur la figure 4, le cordon thermofusible 5 est appliqué contre un joint de finition 6 en matière élastomérique, disposé à la périphérie du vitrage. Ce joint 6 est relié au cordon thermofusible 5 par un insert métallique 7 constituant un élément chauffant électrique qui permet de fondre le cordon thermofusible pour le coller fortement au vitrage. Dans le brevet français 2547345, un tel vitrage prêt à la pose a été décrit, l'insert chauffant servant à la fixation et sur le verre et sur le cadre rigide. Mais comme il a été décrit précédemment, le temps de collage est long. Le dispositif fixé sur le cadre rigide, selon l'invention permet de réduire considérablement le temps de pose.

Le cadre rigide 3 comprend une paroi 8 destinée à recevoir le cordon thermofusible 5 et s'étendant vers l'intérieur du cadre 3. Le dispositif 1 comprend un profilé 9 en matière plastique auquel est fixé un élément 10 résistant et chauffant découpé dans une bande en métal élastique de section transversale sensiblement en U. L'une 10a des ailes de cet élément 10 est noyée dans la matière plastique du profilé 9 et l'autre aile 10b est libre par rapport à ce profilé. Ainsi l'aile libre et élastique 10b forme avec la profilé 9 une pince pouvant s'engager élastiquement sur la paroi 8 du cadre rigide 3, comme indiqué sur les figures 2, 3 et 4.

La largeur _1_ du profilé 9 est déterminée pour que celui-ci recouvre sensiblement la totalité de la surface de la paroi 8 du cadre opposée à celle destinée à recevoir le cordon thermofusible 5.

Comme indiqué sur les figures 2 et 4, l'aile libre 10b de l'élément chauffant 10 est conformée de façon à pouvoir prendre appui élastique sur la surface 8a de la paroi 8 du cadre 3 destinée à recevoir le cordon thermofusible 5. La longueur de cette aile 10b est à cet effet suffisante pour que celle-ci vienne en contact avec le cordon en matière thermofusible 5 disposé à la périphérie du vitrage 2.

On voit d'autre part sur la figure 3 que l'aile libre 10b de l'élément chauffant 10 comprend des évidements 11 formés par exemple entre des dents ou analogues. Le but de ces évidements 11 est de conférer à l'élément chauffant 10 une valeur ohmique suffisante compte tenu du chauffage par effet Joule que l'one veut obtenir. Le but des évidements 11 est également d'obtenir que le cordon thermofusible 5 adhère à la surface 8a de la paroi 8 après fusion superficielle.

Par ailleurs, le bord 10c de l'élément chauffant 10 est replié vers l'extérieur pour faciliter l'engagement du dispositif 1 sur la paroi 8.

Pour éviter tout court-circuit entre la paroi métallique 8 et l'élément chauffant 10, la surface 8a de celle-ci est revêtue d'une mince couche isolante (non représentée) résistant à la température de chauffage, telle que de l'émail.

Dans l'exemple représenté, le profilé 9 en matière plastique présente une section sensiblement en forme de L. L'aile 9a de ce profilé dans laquelle est noyée la partie 10a de l'élément chauffant 10 recouvre la surface de la paroi 8 du cadre, opposée à celle recevant le cordon 5 en matière thermofusible. L'autre aile 9b s'étend vers l'extérieur du cadre 3. La longueur de cette autre aile 9b du profilé 9 est sensiblement égale à l'épaisseur du cordon thermofusible 5, lorsque le vitrage 2 est posé dans le cadre 3, comme montré sur la figure 4.

Par ailleurs, le bord de l'aile 9b du profilé 9 comporte une lèvre élastique 9c destinée à prendre appui élastiquement sur la face interne 4 du vitrage 2. Ainsi, le profilé 9 ferme complètement l'espace compris entre le vitrage 2 et la paroi 8 du cadre 3, la face interne de cette dernière étant par ailleurs complètement masquée par l'aile 9a du profilé 9.

Pour fixer le vitrage 2 dans le cadre rigide 3, on procède de la façon suivante (dans le cas par exemple d'une custode de Citroën BX) :

On engage le dispositif 1 sur la paroi 8 du cadre 3 et on raccorde l'élément chauffant 10 à une source de courant électrique.

On pose le vitrage 2 prééquipé du joint de finition 6 et du cordon 5 en matière thermofusible, sur le cadre rigide 3 de façon que ce cordon 5 prenne appui sur l'aile 10b de l'élément chauffant 10.

On fait passer le courant électrique dans l'élément chauffant 10 et dans l'insert métallique chauffant 7. Le chauffage ainsi obtenu fait fondre très rapidement le cordon 5, ce qui lui permet de coller d'une part à la paroi 8 du cadre et d'autre part au vitrage 2.

Par ailleurs, l'aile 9b du profilé 9 évite tout débordement latéral du cordon 5 et masque complètement celui-ci de l'intérieur du vitrage 2.

La matière plastique du profilé 9 doit être suffisamment souple pour pouvoir épouser le contour du cadre 3. Elle doit évidemment supporter la température de chauffage engendrée par l'élément 10.

A titre d'exemple, le profilé 9 peut être en copolymère éthylène-propylène-diène-méthylénique (EPDM).

Dans la réalisation de la figure 5, le vitrage 2 est muni à sa périphérie d'un cordon de collage 12 entièrement en matière thermofusible et préformé pour pouvoir occuper sensiblement tout l'espace compris entre le bord du vitrage 2 et le cadre 3. Un tel vitrage prêt pour la pose a été décrit dans le brevet français 86 17818 de la demanderesse.

Le dispositif 1 est identique à celui représenté sur les figures 1 à 4. Dans l'exemple de la figure 5, l'élément chauffant 10 assure seul la fusion du cordon thermofusible 12.

On donne ci-après deux exemples de mise en ouevre du dispositif selon l'invention.

Exemple 1:

Le joint périphérique 12 (voir figure 5) disposé sur le vitrage 2 a été obtenu par surmoulage. Il ne renferme pas d'insert métallique.

La colle thermofusible utilisée pour le joint 12 est à base de polyéther-polyamide telle que commercialisée sous la référence NF166 par la société ATOCHEM.

Le profilé anti-débordement 9 avec son élément chauffant 10 est réalisé avec la même base élastomérique mais avec un point de fusion plus élevé (195°C). Il est disposé sur le cadre 3. Avec un chargeur de batterie, on chauffe l'élément 10 sous une tension de 24 volts pendant 30 secondes. La température de l'élément 10 atteint 200°C. On applique le vitrage 2 sur le cadre 3 avec une pression de 10 kg pendant quelques secondes. En moins d'une minute, le collage est réalisée.

Exemple 2:

On utilise un vitrage prêt à la pose tel que représenté sur la figure 4. Le joint de finition 6 est à base d'EPDM, et contient un insert métallique 7 à proximité immédiate du verre 2 pour fixer, par effet Joule, la colle thermofusible 5 à base de polyuréthane aliphatique de la société QUINN.

Le profilé anti-débordement 9 comporte l'élément chauffant 10 et est en matière élastomérique à base d'EPDM.

Le collage de ce vitrage s'opère de la façon suivante : on applique sur l'élément chauffant du profilé anti-débordement 9 une tension de 45 volts pendant 20 secondes avant l'application du vitrage sur le cadre 3 à l'aide d'une presse.

Température de l'élément chauffant 10 : 200°C
Température du cadre 3 : 160°C environ
Pression d'application : 10 kg environ.

Le temps de montage total du vitrage est inférieur à 1 minute.

Bien entendu, l'invention n'est pas limitée aux exemples de réalisation que l'on vient de décrire et on peut apporter à ceux-ci de nombreuses modifications sans sortir du cadre de l'invention.

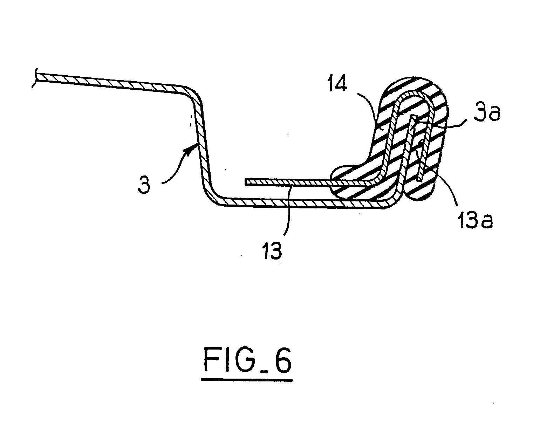

Dans la réalisation de la figure 6, le cadre métallique 3 comporte un rebord plié 3a sur lequel est engagé la partie pliée en U 13a d'un insert métallique 13. Cette partie pliée en U 13a est enrobée dans un profilé 14 en matière plastique.

**Revendications**

1. Dispositif (1) pour fixer un vitrage (2), en particulier un pare-brise, une lunette arrière ou une custode d'automobile, sur un cadre rigide (3), ce vitrage (2) comportant à sa périphérie et sur sa face (4) destinée à être appliquée contre le cadre rigide (3), un cordon (5, 12) en matière thermofusible, le cadre rigide comprenant une paroi (8) destinée à recevoir ce cordon (5, 12) et s'étendant vers l'intérieur du cadre, le dispositif (1) étant caractérisé en ce qu'il comprend un profilé (9) en matière plastique auquel est fixé un élément résistant et chauffant (10) en métal élastique de section sensiblement en U, l'une (10a) des ailes de cet élément étant fixée au profilé (9) et l'autre aile (10b) étant libre par rapport à ce profilé, de façon à former avec celui-ci une pince pouvant s'engager élastiquement sur ladite paroi (8) du cadre rigide (3).

2. Dispositif conforme à la revendication 1, caractérisé en ce que l'une (10a) des ailes de l'élément chauffant (10) est noyée dans la matière plastique du profilé (9).

3. Dispositif conforme à la revendication 2, caractérisé en ce que la largeur (1) du profilé (9) est déterminée pour que celui-ci recouvre sensiblement la totalité de la surface de ladite paroi (8) du cadre opposée à celle destinée à recevoir le cordon thermofusible (5, 12).

4. Dispositif conforme à l'une des revendications 1 à 3, caractérisé en ce que l'aile libre (10b) de l'élément chauffant (10) est conformée de façon à pouvoir prendre appui élastique sur la surface (8a) de ladite paroi (8) du cadre destinée à recevoir le cordon thermofusible (5, 12), la longueur de cette aile (10b) étant suffisante pour que celle-ci vienne en contact avec le cordon en matière thermofusible (5, 12) disposé à la périphérie du vitrage.

5. Dispositif conforme à l'une des revendications 1 à 4, caractérisé en ce que l'aile libre (10b) de l'élément chauffant (10) comprend des évidements (11).

6. Dispositif conforme à l'une des revendications 1 à 5, caractérisé en ce que le bord de l'aile libre (10b) de l'élément chauffant (10) est replié vers l'extérieur.

7. Dispositif conforme à l'une des revendications 1 à 6, caractérisé en ce que le profilé (9) en matière plasstique présente une section sensiblement en forme de L, l'une (9a) des ailes de ce profilé étant destinée à recouvrir la surface de ladite paroi (8) du cadre, opposée à celle destinée à recevoir le cordon en matière thermofusible (5, 12) et l'autre aile (9b) étant destinée à s'étendre vers l'extérieur du cadre (3) pour masquer le cordon (5, 12).

8. Dispositif conforme à la revendication 7, caractérisé en ce que la longueur de ladite autre aile (9b) du profilé (9) est sensiblement égale à l'épaisseur du cordon (5) en matière thermofusible, lorsque le vitrage (2) est posé dans le cadre (3).

9. Dispositif conforme à l'une des revendications 7 ou 8, caractérisé en ce que le bord de ladite autre aile (9b) du profilé (9) comporte une lèvre élastique (9c) destinée à prendre appui élastiquement sur la face interne (4) du vitrage (2).

0292364

FIG_1

FIG_2

FIG_4

FIG_3

FIG_5

0292364

FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 057 522 (SCHLEGEL)<br>* Page 9, ligne 29 - page 11, ligne 30; figures 3-5 * | 1,5 | B 60 J    1/02 |
| A | | 2,4,6,7,9 | |
| | --- | | |
| Y | EP-A-0 081 426 (BOUSSOIS)<br>* Page 5, lignes 21-28; figure 1 * | 1,5 | |
| | --- | | |
| A | PATENT ABSTRACTS OF JAPAN, vol. 8, no. 136 (M-304)[1573], 23 juin 1984, page 22 M 304; & JP-A-59 34 917 (NISSAN JIDOSHA K.K.) 25-02-1984<br>* Abrégé; figure * | 8,9 | |
| | --- | | |
| A | GB-A-2 168 742 (HONDA)<br>* Page 1, lignes 94-129; figures 3,4 * | 3,8 | |
| | ----- | | |

DOMAINES TECHNIQUES RECHERCHES (Int. Cl.4)

B 60 J
B 60 R

Le présent rapport a été établi pour toutes les revendications

| Lieu de la recherche | Date d'achèvement de la recherche | Examinateur |
|---|---|---|
| LA HAYE | 23-08-1988 | AYITER I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P0402)